# EUROPEAN PATENT APPLICATION

(11) **EP 4 641 410 A1**
(43) Date of publication of application: **29.10.2025**
(21) Application number: 25169036.8
(22) Date of filing: 08.04.2025
(51) Int. Cl.: G06F 18/214, G06V 10/82

(54) **METHOD AND SYSTEM FOR GENERATING COMPOSITE IMAGE**

(30) Priority: 11.04.2024 KR 20240048934
(71) Applicant: GenGenAI Inc., Seoul 06038 (KR)
(72) Inventor: CHO, Hojin, 06038 Seoul (KR); KIM, Sangil, 06038 Seoul (KR); YEO, Donghun, 06038 Seoul (KR); JO, Hanseok, 06038 Seoul (KR); HEO, Hoyeong, 06038 Seoul (KR)
(74) Representative: Studio Torta S.p.A.

(57) **Abstract**

An example image generation method includes acquiring first content information representing structural information of objects to be generated in a composite image, receiving first event information associated with a specific event to be generated in the composite image, generating the composite image in a first domain style based on the first content information and the first event information by using an artificial neural network model, and outputting the composite image in the first domain style.

## Description

### BACKGROUND

### Field

The present disclosure relates to a method and system for generating a composite image, and more specifically, to a method and system for generating an image that includes content associated with a specific event.

### Description of the Related Art

AI technology is a technology for developing systems that learn large amounts of data and recognize patterns, thereby making intelligent decisions, by utilizing machine learning and deep learning techniques. AI technology has been innovatively employed in various fields, including predictive analytics, autonomous driving, medical diagnosis, language processing, and image generation. In particular, AI-based image generation technology is used for generating a new image based on input such as text. Recently, AI-based image generation technology has made innovative advancements due to developments in deep learning technology and generative models.

Meanwhile, AI technology is also used in a variety of ways in the defense industry field. For example, AI technology may be utilized in various applications such as military operations, threat detection, training and simulation, and drone systems. However, there is a severe lack of training data necessary for training an AI model used in the defense industry field. Accordingly, there is a difficulty in securing a sufficient amount of actual training data needed for training AI models, and even if such data is secured, there is a problem in that high cost and a long period of time are required.

### SUMMARY

The present disclosure provides a method and system for generating a composite image in order to address the above problems.

The present disclosure may be implemented in various ways, including methods, devices (systems), or non-transitory computer-readable recording media storing instructions.

According to an embodiment, an image generation method performed by at least one processor may include acquiring first content information representing structural information of objects to be generated in a composite image, receiving first event information associated with a specific event to be generated in the composite image, generating the composite image in a first domain style based on the first content information and the first event information by using an artificial neural network model, and outputting the composite image in the first domain style.

According to an embodiment, acquiring the first content information may include receiving an input image in a second domain style and generating the first content information based on the input image. The first domain style may be different from the second domain style.

According to an embodiment, receiving the first event information may include receiving region information associated with the specific event. The composite image may be an image in which content associated with the specific event is generated in a region corresponding to the region information.

According to an embodiment, the region information may include position information and size information associated with the specific event.

According to an embodiment, the composite image may include a specific object, and the region information for the specific event may be associated with a region adjacent to the specific object.

According to an embodiment, the first event information may include at least one of segmentation information associated with the specific event, bounding box information, edge information, or text information.

According to an embodiment, the first event information may include multiple different event information associated with the specific event to be generated in the composite image. Generating the composite image may include encoding (1-1)-th event information to generate first encoded data, encoding (1-2)-th event information to generate second encoded data, and generating the composite image in the first domain style based on the first encoded data and the second encoded data.

According to an embodiment, the (1-1)-th event information and the (1-2)-th event information may be two among segmentation information, bounding box information, edge information, and text information.

According to an embodiment, the artificial neural network model may be generated by receiving a training image in the first domain style associated with the specific event, generating second content information based on the training image, generating second event information associated with the specific event based on the training image, and training the artificial neural network model based on training data including the second content information, the second event information, and the training image.

According to an embodiment, the first domain style may be an IR (Infrared) image style.

According to an embodiment, the specific event may be an event associated with a battlefield situation.

According to an embodiment, an image generation method performed by at least one processor may include acquiring a first input image in a first domain style, receiving first event information associated with a specific event to be generated in a composite image, generating the composite image in the first domain style based on the first input image and the first event information by using a first artificial neural network model, and outputting the composite image in the first domain style.

According to an embodiment, the first artificial neural network model may be trained by receiving a training image in the first domain style associated with the specific event, generating second event information associated with the specific event based on the training image, and training the first artificial neural network model based on a pair including the second event information and the training image.

According to an embodiment, acquiring the first input image may include receiving a second input image in a second domain style, generating content information based on the second input image, and generating the first input image in the first domain style associated with the content information by using a second artificial neural network model. The first domain style and the second domain style may be different from each other.

According to an embodiment, the first domain style may be an IR (Infrared) image style, the second domain style may be a real-world image style, and the specific event may be an event associated with a battlefield situation.

According to an embodiment, a non-transitory computer-readable recording medium storing instructions for causing a computer to execute the aforementioned method may be provided.

According to an embodiment, an information processing system may include a communication module, a memory, and at least one processor connected to the memory and configured to execute at least one computer-readable program stored in the memory. The at least one program may include instructions for acquiring first content information representing structural information of objects to be generated in a composite image, receiving first event information associated with a specific event to be generated in the composite image, generating the composite image in a first domain style based on the first content information and the first event information by using an artificial neural network model, and outputting the composite image in the first domain style.

According to some embodiments of the present disclosure, the processor may generate a composite image for virtually unlimited desired scenarios. For example, a variety of composite images in an IR image style that include events associated with a battlefield situation or the defense industry may be generated.

According to some embodiments of the present disclosure, the processor may generate a composite image in an IR style that includes a specific event associated with a battlefield situation. The generated composite image may be utilized as training data for an AI model (for example, an Anti-Drone System (ADS), an autonomous weapons system, a national security system, etc.) used in the defense industry field. Therefore, the problem of difficulty in obtaining a sufficient amount of actual images (e.g., real-world images) needed to train AI models in the defense industry field may be solved at low cost and in a short time.

According to some embodiments of the present disclosure, the artificial neural network model may generate a high-quality composite image without depending solely on a single piece of content information by extracting multiple pieces of content information of different formats or types from one training image. In addition, the artificial neural network model may generate a composite image that reflects various content information items ranging from high-level structural information to low-level structural information.

According to some embodiments of the present disclosure, since the model may be trained based on multiple pieces of event information in different formats or types, the artificial neural network model may allow more accurate settings for a specific event to be generated thereby allowing generation of a high-quality composite image.

Effects of the present disclosure are not limited to the effects mentioned above, and various other effects not mentioned will be clearly understood by those of ordinary skill in the art (one of ordinary skill) to which the present disclosure pertains from the description of the claims.

### BRIEF DESCRIPTION OF THE DRAWINGS

Embodiments of the present disclosure will be described below with reference to the accompanying drawings, in which like reference numerals refer to like elements, without being limited thereto.
FIG. 1 is a diagram illustrating an example of generating a composite image based on content information and event information according to an embodiment of the present disclosure.
FIG. 2 is a schematic diagram illustrating a configuration in which an information processing system is connected to communicate with multiple user terminals in order to generate a composite image according to an embodiment of the present disclosure.
FIG. 3 is a block diagram illustrating internal configurations of a user terminal and an information processing system according to an embodiment of the present disclosure.
FIG. 4 is a diagram illustrating an example of generating a first input image based on content information and generating a composite image based on the generated first input image and event information, according to an embodiment of the present disclosure.
FIG. 5 is a diagram illustrating an example of training an artificial neural network model according to an embodiment of the present disclosure.
FIG. 6 is a diagram illustrating an example of training data of the artificial neural network model according to an embodiment of the present disclosure.
FIG. 7 is a diagram illustrating an example of training a first artificial neural network model according to an embodiment of the present disclosure.
FIG. 8 is a diagram illustrating an example of a generated composite image according to an embodiment of the present disclosure.
FIG. 9 is a flowchart illustrating an example of an image generation method according to an embodiment of the present disclosure.

### DETAILED DESCRIPTION

Hereinafter, specific details for carrying out embodiments of the present disclosure will be described in detail with reference to the accompanying drawings. However, in the following description, a detailed description of known functions or configurations that may unnecessarily obscure the gist of the present disclosure will be omitted.

In the accompanying drawings, identical or corresponding components are given identical reference numerals. In addition, in the descriptions of the following embodiments, the description of identical or corresponding components may be omitted in repetition. However, even if descriptions regarding components are omitted, it is not intended that such components are excluded from any embodiment.

Advantages and features of the disclosed embodiments, and methods of achieving the same, will become apparent with reference to the embodiments described below in conjunction with the accompanying drawings. However, the present disclosure is not limited to the embodiments disclosed herein and may be implemented in various different forms, and the embodiments are provided merely to render the present disclosure complete and to fully convey the scope of the invention to one of ordinary skill.

A brief explanation is provided for the terminology used in the present specification, and the disclosed embodiments will then be described in detail. The terminology used in the present specification has been selected from general terms commonly used at present while considering functions within the present disclosure. These terms may vary depending on the intent of those skilled in relevant fields or on court precedents, new technology emergence, etc. In certain cases, arbitrarily selected terms may be used by the applicant, and in such cases, specific definitions of such terms will be described in the specification of the relevant invention. Thus, the terminology used in the present disclosure is not simply the name of the term, but must be interpreted based on the meaning of the term and on the overall content of the present disclosure.

In the present specification, unless a singular expression is clearly specified to be singular in context, it may include plural expressions. Likewise, unless it is clearly specified to be plural in context, a plural expression may include a singular expression. Throughout the specification, if a part is described as "including" a component, it means that other components may also be included unless there is a specific statement to the contrary.

Also, the terms "module" or "unit" used in the present specification mean software or hardware components that perform certain roles. However, "module" or "unit" does not necessarily mean something limited to software or hardware only. "Module" or "unit" may be configured to be present in addressable storage media and may be configured to reproduce one or more processors. Thus, for example, "module" or "unit" may include, at least one among software components such as object-oriented software components, class components, and task components, processes, functions, attributes, procedures, subroutines, segments of program code, drivers, firmware, microcode, circuits, data, databases, data structures, tables, arrays, or variables. Functions provided inside components, "modules," or "units" may be combined into fewer modules or units or further separated into additional modules or units.

According to an embodiment of the present disclosure, "module" or "unit" may be implemented by a processor and a memory. "Processor" should be construed broadly to include a general-purpose processor, a central processing unit (CPU), a microprocessor, a digital signal processor (DSP), a controller, a microcontroller, a state machine, etc. In some environments, "processor" may refer to an application-specific integrated circuit (ASIC), a programmable logic device (PLD), a field-programmable gate array (FPGA), etc. "Processor" may also refer to a combination of processing devices such as a combination of a DSP and a microprocessor, a combination of multiple microprocessors, a combination of one or more microprocessors coupled with a DSP core, or a combination of any other such configurations. Also, "memory" should be construed broadly to include any electronic component capable of storing electronic information. "Memory" may refer to various types of processor-readable media such as random access memory (RAM), read-only memory (ROM), non-volatile random access memory (NVRAM), programmable read-only memory (PROM), erasable programmable read-only memory (EPROM), electrically erasable PROM (EEPROM), flash memory, magnetic or optical data storage, and registers. If a processor may read information from and/or write information to a memory, the memory is said to be in electronic communication with the processor. A memory integrated into a processor is in electronic communication with the processor.

In the present disclosure, "system" may include at least one device among a server device and a cloud device, but is not limited thereto. For example, the system may be configured as one or more server devices. In another example, the system may be configured as one or more cloud devices. In yet another example, the system may be configured and operated in such a way that the server device and the cloud device operate together.

In the present disclosure, "display" may refer to any display device associated with a computing device, for example, any display device capable of displaying any information/data controlled by or provided from the computing device.

In the present disclosure, "each of a plurality of A" or "each of the plurality of A" may refer to each of all components included in the plurality of A, or may refer to each of some components included in the plurality of A.

In the present disclosure, "artificial neural network model" may refer to a model that includes one or more artificial neural networks configured with an input layer, multiple hidden layers, and an output layer for inferring an answer with respect to a given input. Each layer may include multiple nodes.

In the present disclosure, "content information" may be information that represents structural information (for example, category information of objects, shape information, position information, etc.) for backgrounds and/or objects in an image. For example, content information may include semantic segmentation information, panoptic segmentation information, instance segmentation information, SAM (Segmentation Anything Model) result information, bounding box information, edge information, depth information, etc.

In the present disclosure, "domain style" refers to the visual characteristics and/or artistic style of an image and may indicate a unique combination of various visual elements such as the camera's FOV (Field Of View), camera parameters, color, texture, pattern, and shape of the image, as well as the overall appearance and aesthetic quality of the image. For example, an image's domain style may include a virtual domain style such as computer graphics (e.g., computer game graphics) or a real-world domain style such as what is photographed from the real world by a specific camera. If cameras for photographing the real world (for example, an RGB camera, an IR camera, a thermal imaging camera, etc.) differ from one another, images taken by each camera may have different domain styles depending on the various characteristics of the camera.

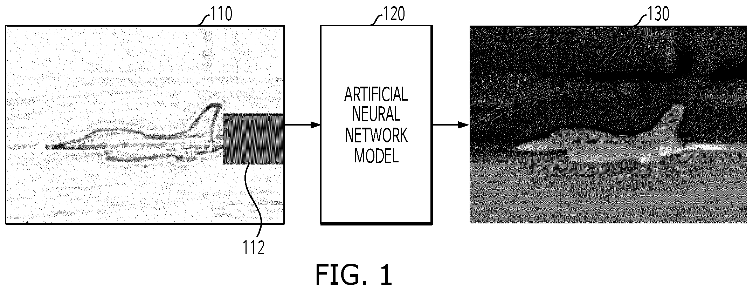

FIG. 1 is a diagram illustrating an example of generating a composite image 130 based on content information 110 and event information 112 according to an embodiment of the present disclosure. According to an embodiment, a processor (for example, at least one processor of a user terminal and/or an information processing system) may acquire content information 110. Content information 110 may represent structural information of objects to be generated in a composite image 130. Content information 110 may include semantic segmentation information, panoptic segmentation information, instance segmentation information, SAM (Segmentation Anything Model) result information, bounding box information, edge information, depth information, and so forth. Additionally or alternatively, content information 110 may be information generated by a hand drawing of a person.

According to an embodiment, the processor may acquire event information 112. Event information 112 may refer to information associated with a specific event to be generated in the composite image 130. The specific event may be an event associated with a battlefield situation (for example, an event occurring in an actual battlefield situation or a simulated battlefield situation). In addition, the specific event may be an event associated with an object of the defense industry (for example, a fighter jet, a battleship, etc.). For example, the event may include a fighter jet engine flame emission event, a fire event, a being-shot event, an explosion event, an arson event, an illumination flare event, etc. The event information may include at least one among segmentation information associated with the specific event, bounding box information, edge information, or text information.

According to an embodiment, event information 112 may include multiple different event information items associated with a single specific event to be generated in the composite image 130. For example, the multiple different event information items may include at least two among segmentation information, bounding box information, edge information, or text information that is associated with the specific event.

According to an embodiment, event information 112 may include region information associated with the specific event. Region information may refer to information about a region in which content associated with the specific event is to be generated in the composite image 130. For example, region information may include position information (for example, coordinate information) and/or size information (for example, height information or width information) associated with the specific event. In another example, region information may include text information describing position information and/or size information associated with the specific event.

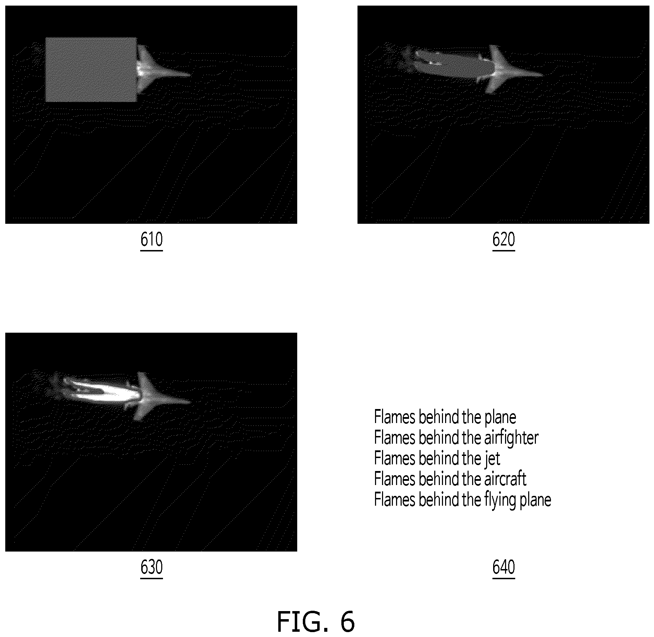

According to an embodiment, event information 112 may include class information associated with the specific event. Class information may refer to the type, configuration, or characteristics, etc., of the specific event to be generated in the composite image 130. Examples of region information and/or class information included in event information 112 are described in detail below with reference to FIG. 6.

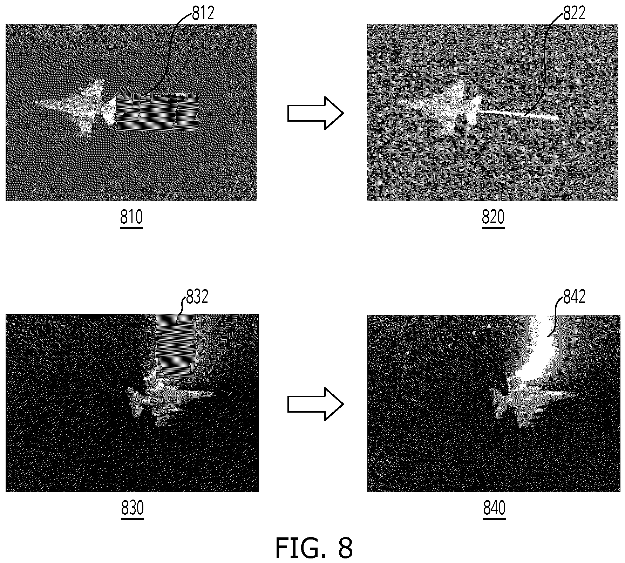

According to an embodiment, event information 112 may include at least one of region information or class information. For example, if event information 112 includes only region information, the artificial neural network model 120 may generate the composite image 130 in which content associated with the specific event is generated in a region corresponding to the region information. In that case, class information of the specific event may be automatically determined based on the region information, or the artificial neural network model 120 may be pre-trained to generate composite image 130 associated with the specific event. Similarly, if event information 112 includes only class information, the artificial neural network model 120 may generate a composite image 130 including the specific event corresponding to that class information. In this case, region information of the specific event may be automatically determined based on the class information. An example of determining region information and class information is described below in detail with reference to FIG. 8.

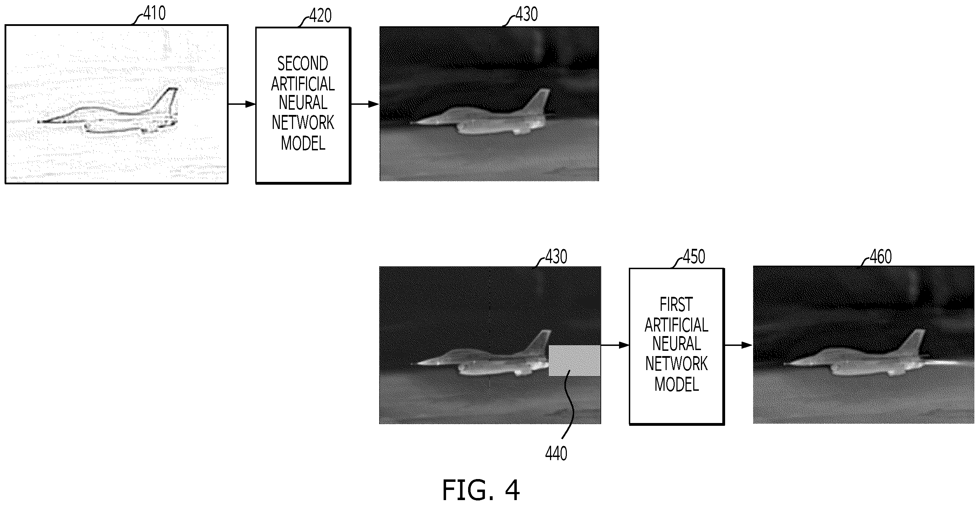

According to an embodiment, the artificial neural network model 120 may generate the composite image 130. Specifically, the artificial neural network model 120 may receive content information 110 and event information 112 as inputs and generate the composite image 130. In FIG. 1, a single artificial neural network model 120 is described as receiving content information 110 and event information 112 to generate the composite image 130, but the present disclosure is not limited thereto. For example, the composite image 130 may be generated by using two or more artificial neural network models. An example of generating a composite image 130 by using two artificial neural network models is described below in detail with reference to FIG. 4.

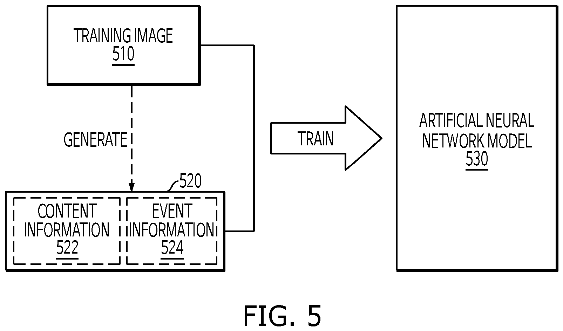

According to an embodiment, the composite image 130 may be an image in a specific domain style (for example, an IR (Infrared) image style). According to an embodiment, artificial neural network model 120 may be a model trained based on training images in the specific domain style and content information and event information extracted from the training images in the specific domain style. Accordingly, artificial neural network model 120 may be trained to receive content information 110 and event information 112 as inputs and generate composite image 130 in the specific domain style. An example of training artificial neural network model 120 is described below in detail with reference to FIG. 5.

As described above, artificial neural network model 120 is described as receiving content information 110 and event information 112 as inputs, but the present disclosure is not limited thereto, and the artificial neural network model 120 may receive an input image and event information 112 as inputs. For example, the artificial neural network model 120 may receive an input image and extract at least one piece of content information 110 from the received input image. Then, the composite image 130 may be generated based on the extracted content information 110 and event information 112.

According to an embodiment, the artificial neural network model 120 may extract multiple different pieces of content information 110 from the input image. The multiple different pieces of content information 110 may include at least two among semantic segmentation information, panoptic segmentation information, instance segmentation information, SAM result information, bounding box information, edge information, depth information, sketch information, and text information. Then, the composite image 130 may be generated based on the extracted multiple content information items 110 and event information 112.

According to an embodiment, the artificial neural network model 120 may be a model trained to generate the composite image 130 in a specific domain style (for example, an IR image style). Thus, the domain style of the input image and the domain style of composite image 130 may differ from each other. For example, the input image may be a real image (e.g., real-world image), such as that photographed by an RGB camera in an actual environment, while composite image 130 may be an IR image. In addition, the input image may be an image in various domain styles (for example, a cartoon image style, a pointillist image style, a hand-drawn image style, etc.).

With this configuration, the processor may generate composite images for virtually unlimited desired scenarios. For example, a variety of composite images in an IR image style that include events associated with a battlefield situation or the defense industry may be generated. Such generated composite images may be utilized as training data for an AI model (for example, an Anti-Drone System (ADS), an autonomous weapons system, a national security system, etc.) employed in the defense industry field. Accordingly, the problem of difficulty in obtaining a sufficient amount of actual images (e.g., real-world images) needed to train AI models in the defense industry field may be solved at low cost and in a short time.

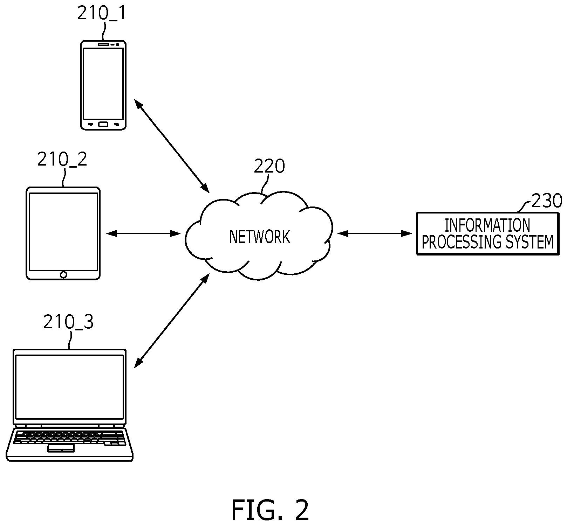

FIG. 2 is a schematic diagram illustrating a configuration in which information processing system 230 is connected to communicate with multiple user terminals 210_1, 210_2, 210_3 in order to generate a composite image according to an embodiment of the present disclosure. As shown, multiple user terminals 210_1, 210_2, 210_3 may be connected to information processing system 230, which is capable of generating a composite image, through network 220. Here, multiple user terminals 210_1, 210_2, 210_3 may include user terminals that receive the generated composite image.

In an embodiment, information processing system 230 may include one or more server devices and/or databases or one or more distributed computing devices and/or distributed databases based on a cloud computing service, which may store, provide, and execute a computer-executable program (for example, a downloadable application) and data related to generating a composite image.

The composite image provided by information processing system 230 may be provided to the users through, for example, an image generation application, a web browser, or a web browser extension program installed on each of multiple user terminals 210_1, 210_2, 210_3. For instance, information processing system 230 may provide information corresponding to, or perform processing corresponding to, a composite image generation request received from user terminals 210_1, 210_2, 210_3 through an image generation application, and so forth.

Multiple user terminals 210_1, 210_2, 210_3 may communicate with information processing system 230 through network 220. Network 220 may be configured to enable communication between multiple user terminals 210_1, 210_2, 210_3 and information processing system 230. Depending on the installation environment, network 220 may include, for example, a wired network such as Ethernet, wired home network (Power Line Communication), telephone line communication devices, RS-serial communication, etc., a wireless network such as a mobile communication network, a WLAN (Wireless LAN), Wi-Fi, Bluetooth, ZigBee, or a combination thereof. The communication method is not limited, and the communication method using a communication network (for example, a mobile communication network, a wired Internet, a wireless Internet, a broadcast network, a satellite network, etc.) that network 220 may include, as well as short-distance wireless communication among user terminals 210_1, 210_2, 210_3, may also be included.

In FIG. 2, a cellphone terminal 210_1, a tablet terminal 210_2, and a PC terminal 210_3 are illustrated as examples of user terminals. However, the present disclosure is not limited thereto, and user terminals 210_1, 210_2, 210_3 may be any computing devices that are capable of wired and/or wireless communication and that can execute an image generation service application or web browser, or that have an image generation service application or web browser installed. For example, user terminals may include AI speakers, smartphones, cellphones, navigation devices, computers, laptops, digital broadcasting terminals, PDAs (Personal Digital Assistants), PMPs (Portable Multimedia Players), tablet PCs, game consoles, wearable devices, IoT (internet of things) devices, VR (virtual reality) devices, AR (augmented reality) devices, set-top boxes, and so forth. Furthermore, although three user terminals 210_1, 210_2, 210_3 are illustrated in FIG. 2 as communicating with information processing system 230 through network 220, the present disclosure is not limited thereto, and a different number of user terminals may be configured to communicate with information processing system 230 through network 220.

In FIG. 2, the configuration in which user terminals 210_1, 210_2, 210_3 communicate with information processing system 230 so as to receive the generated composite image is shown as an example, but the present disclosure is not limited thereto. For example, user terminals 210_1, 210_2, 210_3 may generate the composite image directly without communicating with information processing system 230.

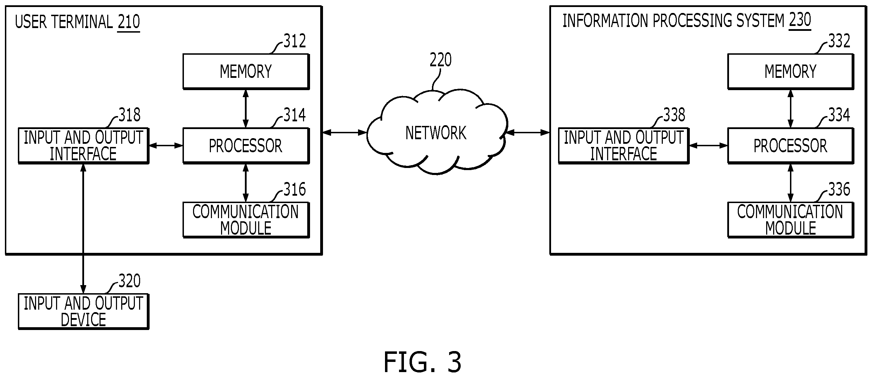

FIG. 3 is a block diagram illustrating internal configurations of user terminal 210 and information processing system 230 according to an embodiment of the present disclosure. User terminal 210 may refer to any computing device capable of running an application, a web browser, etc., and capable of wired/wireless communication, for example, cellphone terminal 210_1, tablet terminal 210_2, PC terminal 210_3 of FIG. 2. As shown, user terminal 210 may include memory 312, processor 314, communication module 316, and input/output interface 318. Similarly, information processing system 230 may include memory 332, processor 334, communication module 336, and input/output interface 338. As shown in FIG. 3, user terminal 210 and information processing system 230 may be configured to communicate data and/or information via their respective communication modules 316, 336 through network 220. Also, input/output device 320 may be configured to input information and/or data to user terminal 210 or output information and/or data generated by user terminal 210 via input/output interface 318.

Memory 312, 332 may include any non-transitory computer-readable recording medium. According to an embodiment, memory 312, 332 may include a permanent mass storage device such as a ROM (read only memory), a disk drive, an SSD (solid state drive), or a flash memory. In another example, permanent mass storage devices such as a ROM, an SSD, a flash memory, or a disk drive may be separate from memory 312, 332 and included in user terminal 210 or information processing system 230 as an independent storage device. Also, memory 312, 332 may store an operating system and at least one program code.

Such software components may be loaded from a separate computer-readable recording medium other than memory 312, 332. Such a separate computer-readable recording medium may include a recording medium directly connectable to user terminal 210 or information processing system 230, for example, a computer-readable recording medium such as a floppy drive, a disk, a tape, or a DVD/CD-ROM drive, or a memory card. In another example, the software components may be loaded into memory 312, 332 through communication module 316, 336 rather than a computer-readable recording medium. For example, at least one program may be loaded into memory 312, 332 based on a computer program installed by files provided by developers or by a file distribution system that distributes installation files of an application over network 220.

Processor 314, 334 may be configured to process commands of a computer program by performing basic arithmetic, logic, and input/output operations. The commands may be provided to processor 314, 334 by memory 312, 332 or communication module 316, 336. For example, processor 314, 334 may be configured to execute commands received according to program code stored in memory 312, 332.

Communication module 316, 336 may provide a configuration or function for enabling communication between user terminal 210 and information processing system 230 through network 220, and may provide a configuration or function that allows user terminal 210 and/or information processing system 230 to communicate with another user terminal or another system (for example, a separate cloud system). For example, a request or data (for example, an image generation model training request, a composite image generation request, etc.) generated by processor 314 of user terminal 210 according to program code stored in a storage device such as memory 312 may be delivered to information processing system 230 through network 220 under the control of communication module 316. Conversely, a control signal or command provided under the control of processor 334 of information processing system 230 may be received by user terminal 210 through communication module 336 and network 220, and then through communication module 316 of user terminal 210.

Input/output interface 318 may be a means for interfacing with input/output device 320. In one example, an input device may include a camera containing an audio sensor and/or an image sensor, a keyboard, a microphone, or a mouse, etc., and an output device may include a display, a speaker, or a haptic feedback device, etc. In another example, input/output interface 318 may be a means for interfacing with a device integrated into a single component configured for both input and output, such as a touchscreen. For example, in processing commands of a computer program loaded into memory 312, processor 314 of user terminal 210 may display a service screen configured by information and/or data provided by information processing system 230 or another user terminal on a display through input/output interface 318. In FIG. 3, input/output device 320 is illustrated as not being included in user terminal 210, but the present disclosure is not limited thereto, and it may be formed as a single device together with user terminal 210. Also, input/output interface 338 of information processing system 230 may be a means for interfacing with an input or output device (not shown) that is connected to or included in information processing system 230. In FIG. 3, input/output interfaces 318 and 338 are illustrated as components separate from processors 314 and 334, but the present disclosure is not limited thereto, and input/output interfaces 318 and 338 may be included in processors 314 and 334.

User terminal 210 and information processing system 230 may include more components than those shown in FIG. 3. However, there is no need to explicitly illustrate most conventional components. In an embodiment, user terminal 210 may be implemented to include at least some of the above-described input/output device(s) 320. Also, user terminal 210 may further include other components such as a transceiver, a GPS (Global Positioning System) module, a camera, various sensors, or a database.

While a program for training an artificial neural network model, an image generation application, and so forth are operating, processor 314 may receive or select text, images, video, audio, and/or operations, etc., input through an input device such as a touch screen, a keyboard, a camera containing an audio sensor and/or an image sensor, or a microphone, via input/output interface 318, and may store the received text, images, video, audio, and/or operations, etc., in memory 312 or provide them to information processing system 230 through communication module 316 and network 220.

Processor 314 of user terminal 210 may be configured to manage, process, and/or store information and/or data received from input/output device 320, another user terminal, information processing system 230, and/or multiple external systems. Information and/or data processed by processor 314 may be provided to information processing system 230 through communication module 316 and network 220. Processor 314 of user terminal 210 may transmit information and/or data to input/output device 320 through input/output interface 318, enabling output. For example, processor 314 may output or display the received information and/or data on a screen of user terminal 210.

Processor 334 of information processing system 230 may be configured to manage, process, and/or store information and/or data received from multiple user terminals 210 and/or multiple external systems. Information and/or data processed by processor 334 may be provided to user terminal 210 through communication module 336 and network 220.

FIG. 4 is a diagram illustrating an example of generating a first input image 430 based on content information 410 and generating a composite image 460 based on the generated first input image 430 and event information 440, according to an embodiment of the present disclosure. According to an embodiment, a user terminal or information processing system for generating a composite image may include a first artificial neural network model 450 and a second artificial neural network model 420.

According to an embodiment, a processor (for example, at least one processor of a user terminal and/or an information processing system) may acquire content information 410. Content information 410 may represent structural information of objects to be generated in the first input image 430. Content information 410 may include semantic segmentation information, panoptic segmentation information, instance segmentation information, SAM result information, bounding box information, edge information, depth information, etc. Additionally, content information 410 may be information generated by a person's hand drawing.

According to an embodiment, the second artificial neural network model 420 may generate the first input image 430 in a first domain style based on content information 410. For example, the second artificial neural network model 420 may be a model trained using pairs, which includes training images in the first domain style and content information extracted from the training images, as training data. Therefore, the second artificial neural network model 420 may be trained to receive content information 410 as an input and generate the first input image 430 in the first domain style. Here, the first domain style may be an IR image style, without being limited thereto.

Alternatively, the second artificial neural network model 420 may generate the first input image 430 in a first domain style based on a second input image in a second domain style. For example, the second artificial neural network model 420 may receive the second input image in the second domain style, extract at least one piece of content information 410 from the received second input image, and then generate the first input image 430 in the first domain style based on the extracted content information 410. In that case, the first domain style and the second domain style may differ from each other. For instance, the second input image may be a virtual image generated through a computer game or computer simulation, or it may be a real-world image, while the first input image 430 may be an IR image. In addition, the second input image may be an image in various domain styles (for example, a cartoon image style, a pointillist image style, a hand-drawn image style, etc.).

According to an embodiment, the processor may acquire event information 440. Event information 440 may refer to information associated with a specific event to be generated in composite image 460. The specific event may be an event associated with a battlefield situation or the defense industry. Event information may include one among segmentation information, bounding box information, edge information, or text information associated with the specific event.

According to an embodiment, the processor may acquire multiple different event information items 440. Event information 440 may include multiple different event information items associated with a single specific event to be generated in the composite image 460. The multiple different event information items may include at least two among segmentation information, bounding box information, edge information, and text information associated with the specific event.

According to an embodiment, the processor may merge the first input image 430 in the first domain style generated from the second artificial neural network model 420 and event information 440. Then, the first artificial neural network model 450 may receive the merged first input image 430 and event information 440 as input data.

According to an embodiment, the first artificial neural network model 450 may generate the composite image 460. Specifically, the first artificial neural network model 450 may receive, as inputs, the first input image 430 in the first domain style generated from the second artificial neural network model 420, and event information 440, and then generate the composite image 460. In that case, the composite image 460 may be an image in which content associated with a specific event corresponding to event information 440 is generated. In the illustrated example, the composite image 460 may be an IR image in which a fighter jet engine flame emission event corresponding to event information 440 is generated.

FIG. 5 is a diagram illustrating an example of training an artificial neural network model 530 according to an embodiment of the present disclosure. FIG. 5 is a diagram illustrating an example in which the artificial neural network model 120 shown in FIG. 1 is trained. According to an embodiment, the processor may receive a training image 510 in a specific domain style, for training the artificial neural network model 530. The training image 510 may include content associated with a specific event. The specific event may be an event associated with a battlefield situation or the defense industry. For instance, the specific domain style may be an IR image style. Alternatively, the training image 510 in various domain styles other than an IR style may be used.

In an embodiment, the processor may extract at least one piece of content information 522 from the training image 510 in the specific domain style. For example, the content information 522 may be one of semantic segmentation information, panoptic segmentation information, instance segmentation information, SAM result information, bounding box information, edge information, depth information, sketch information, and text information.

In an embodiment, the processor may extract at least one piece of event information 524 from the training image 510 in the specific domain style. For example, event information 524 may be one of segmentation information, bounding box information, edge information, or text information associated with a specific event included in the training image 510.

According to an embodiment, content information 522 and event information 524 may be merged into a single piece of training information 520. In that case, the processor may construct a training data set consisting of pairs of the training image 510 in the specific domain style and training information 520 extracted from training image 510 in the specific domain style. Then, the processor may train the artificial neural network model 530 based on the constructed training data set.

Alternatively, the processor may construct a first training data set as a pair of training image 510 in the specific domain style and content information 522 extracted from the training image 510 in the specific domain style, and construct a second training data set as a pair of training image 510 in the specific domain style and event information 524 extracted from the training image 510 in the specific domain style. Then, the processor may train the artificial neural network model 530 based on each of the first training data set and the second training data set.

As described above, one piece of content information 522 and one piece of event information 524 are extracted from the training image 510 in the specific domain style, but the present disclosure is not limited thereto, and the processor may extract multiple pieces of content information and/or multiple pieces of event information from the training image 510 in the specific domain style.

According to an embodiment, the processor may extract multiple different pieces of content information 522 from the training image 510 in the specific domain style. Specifically, the processor may extract, from the training image 510 in the specific domain style, first through n-th content information (where n is a natural number of at least 2). As a specific example, the processor may extract semantic segmentation information as first content information from the training image 510 in the specific domain style, sketch information as second content information, and edge information as third content information.

According to an embodiment, the processor may construct a training data set as pairs of the training image 510 in the specific domain style and multiple content information 522 extracted from the training image 510 in the specific domain style. For example, the processor may construct a first training data set as a pair of the training image 510 in the specific domain style and first content information extracted from the training image 510 in the specific domain style. Also, the processor may construct an n-th training data set as a pair of the training image 510 in the specific domain style and n-th content information extracted from the training image 510 in the specific domain style.

According to an embodiment, the processor may train multiple artificial neural network models 530 based on multiple different pieces of content information 522 extracted from the training image 510 in the specific domain style. Specifically, the processor may train multiple artificial neural network models 530 based on multiple different training data sets constructed as pairs of the training image 510 in the specific domain style and multiple different pieces of content information extracted from the training image 510 in the specific domain style. Then, a single composite image may be generated by ensembling the information generated by each of the multiple artificial neural network models 530.

Alternatively, the processor may train a single artificial neural network model 530 based on multiple different pieces of content information extracted from the training image 510 in the specific domain style. Specifically, the processor may extract multiple different pieces of content information from the training image 510 in the specific domain style, and then generate one piece of content information by superimposing (or concatenating) the multiple different pieces of content information. For example, the processor may extract semantic segmentation information, sketch information, and Canny edge information from the training image 510 in the specific domain style and then superimpose (or concatenate) the individually extracted content information items to generate one integrated piece of content information. In that case, one integrated piece of content information including all information specialized for each piece of different content information may be generated. Then, a single artificial neural network model 530 may be trained based on a pair of the training image 510 in the specific domain style and the integrated piece of content information.

Similarly, the processor may extract multiple different pieces of event information from the training image 510 in the specific domain style. Specifically, the processor may extract first through m-th event information (where m is a natural number of at least 2) associated with a specific event from the training image 510 in the specific domain style. As a specific example, the processor may extract bounding box information as first event information from the training image 510 in the specific domain style and text information as second event information.

According to an embodiment, the processor may construct a training data set as pairs of training image 510 in the specific domain style and multiple event information extracted from training image 510 in the specific domain style. For example, the processor may construct a first training data set as a pair of the training image 510 in the specific domain style and the first event information extracted from the training image 510 in the specific domain style, and construct an m-th training data set as a pair of the training image 510 in the specific domain style and the m-th event information extracted from training image 510 in the specific domain style.

According to an embodiment, the processor may train multiple artificial neural network models 530 based on multiple different pieces of event information extracted from the training image 510 in the specific domain style. Specifically, the processor may train multiple artificial neural network models 530 based on multiple different training data sets constructed as pairs of the training image 510 in the specific domain style and multiple different pieces of event information extracted from the training image 510 in the specific domain style. Then, a single composite image may be generated by ensembling the information generated by each of the multiple artificial neural network models 530.

Alternatively, the processor may train a single artificial neural network model 530 based on multiple different pieces of event information extracted from the training image 510 in the specific domain style. Specifically, the processor may extract multiple different pieces of event information from the training image 510 in the specific domain style, and then generate one piece of event information by superimposing (or concatenating) the multiple different pieces of event information. For example, the processor may extract bounding box information, edge information, and text information associated with a specific event from the training image 510 in the specific domain style, and then superimpose (or concatenate) each piece of extracted event information to generate one integrated piece of event information. Then, a single artificial neural network model 530 may be trained based on a pair of the training image 510 in the specific domain style and the integrated event information.

With this configuration, the artificial neural network model 530 may generate a high-quality composite image without being dependent on only one piece of content information or one piece of event information, by extracting multiple pieces of content information and/or event information of different formats or types from the single training image 510. For example, the artificial neural network model 530 may generate a composite image reflecting a variety of content information items ranging from high-level structural information down to low-level structural information. Also, more accurate settings for a specific event to be generated are possible, enabling the generation of a high-quality composite image.

FIG. 6 is a diagram illustrating an example of event information according to an embodiment of the present disclosure. According to an embodiment, event information may refer to information associated with a specific event to be generated in a composite image. The specific event may be an event associated with a battlefield situation (for example, an event occurring in an actual battlefield situation or a simulated battlefield situation). In addition, the specific event may be an event associated with an object of the defense industry (for example, a fighter jet, a battleship, etc.).

According to an embodiment, event information may include region information associated with the specific event. Region information may refer to information about a region in which content associated with the specific event is to be generated in the composite image. Region information may include position information and/or size information associated with the specific event.

According to an embodiment, event information may include class information associated with the specific event. Class information may refer to the type, configuration, or characteristics, etc., of the specific event to be generated in the composite image. As a specific example, class information may be categorized into certain types of events such as "flame," "light," etc. Furthermore, even within the type information "flame," various situations may be categorized, for example, flames emitted from a fighter jet engine, flames caused by a fighter jet being shot or exploded, forest fires, and so forth.

According to an embodiment, event information may refer to information in which region information and class information are integrated. Alternatively, event information may include at least one of region information or class information.

According to an embodiment, event information may include bounding box information 610 associated with the specific event. For example, event information may be in the form of a bounding box that surrounds, with a polygon (for example, a rectangle), the region where content associated with the specific event is to be generated in the composite image. In that case, event information may include center coordinate data of the bounding box, the size of the bounding box, class information of the event to be generated within the bounding box, and so forth.

According to an embodiment, event information may include segmentation information 620 associated with the specific event. For example, event information may provide data on the content associated with the specific event at the pixel level. In that case, event information may include coordinate data of pixels forming the boundary of the region in which content associated with the specific event is generated, class information of the event, and so forth.

According to an embodiment, event information may include edge information 630 associated with the specific event. For example, event information may include information on the outline of the region in which content associated with the specific event is to be generated in the composite image, class information of the event to be generated within the outline, etc.

According to an embodiment, event information may include text information 640 associated with the specific event. For example, event information may include text information describing the specific event to be generated in the composite image. In that case, the text information may be expressed in various languages. The text information may include text-form information about the position, size, positional relationship with other objects, class information, etc., of the region in which content associated with the specific event is to be generated.

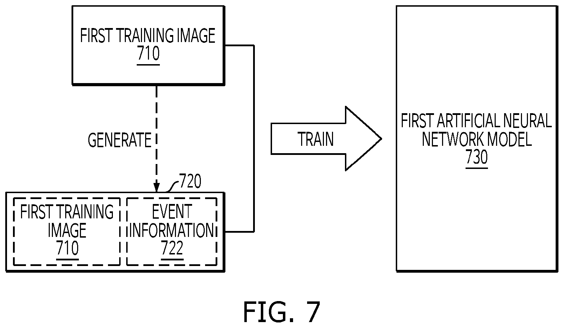

FIG. 7 is a diagram illustrating an example of training a first artificial neural network model 730 according to an embodiment of the present disclosure. FIG. 7 is a diagram illustrating an example in which the first artificial neural network model 450 shown in FIG. 4 is trained. According to an embodiment, the processor may receive a first training image 710 for training the first artificial neural network model 730. The first training image 710 may include content associated with a specific event. The specific event may be an event associated with a battlefield situation or the defense industry. For example, the first training image 710 may be an image in an IR image style. Alternatively, various domain styles of the first training image 710 other than an IR style may be used.

According to an embodiment, the processor may extract at least one piece of event information 722 from the first training image 710. For example, event information 722 may include at least one of segmentation information, bounding box information, edge information, or text information associated with a specific event contained in the first training image 710.

According to an embodiment, the processor may merge the first training image 710 and event information 722 extracted from first training image 710 to generate a second training image 720. As a specific example, if event information 722 is bounding box information, the second training image 720 may be generated by merging first training image 710 and event information 722 so that content associated with the specific event in first training image 710 is covered or obscured by the bounding box.

According to an embodiment, the processor may extract multiple different pieces of event information from the first training image 710. Specifically, the processor may extract first through m-th event information (where m is a natural number of at least 2) associated with the specific event from the first training image 710. For example, the processor may extract bounding box information as first event information and text information as second event information from the first training image 710.

According to an embodiment, the processor may construct a training data set based on the first training image 710 and multiple pieces of event information extracted from the first training image 710. For example, the processor may generate (2-1)-th training image by merging the first training image 710 with first event information extracted from the first training image 710, and then construct a first training data set as a pair of the first training image 710 and (2-1)-th training image. Similarly, the processor may generate (2-m)-th training image by merging the first training image 710 with m-th event information extracted from the first training image 710, and then construct an m-th training data set as a pair of the first training image 710 and the (2-m)-th training image.

According to an embodiment, the processor may train multiple first artificial neural network models 730 based on multiple training data sets. Specifically, the processor may train a (1-1)-th artificial neural network model based on the first training data set. Also, the processor may train a (1-m)-th artificial neural network model based on the m-th training data set. Thus, when generating the composite image, a single composite image may be generated by ensembling the information generated by each of the multiple artificial neural network models.

Alternatively, the processor may train a single first artificial neural network model 730 based on multiple different pieces of event information extracted from the first training image 710. Specifically, the processor may extract multiple different pieces of event information from the first training image 710, and then generate a single piece of event information by superimposing (or concatenating) the multiple different pieces of event information. For example, the processor may extract bounding box information, edge information, and text information associated with a specific event from the first training image 710 in a specific domain style, and then superimpose (or concatenate) each piece of extracted event information to generate one integrated piece of event information. Then, the first artificial neural network model 730 may be trained based on a pair of the first training image 710 and the second training image 720, which is generated by merging the first training image 710 with the integrated piece of event information.

FIG. 8 is a diagram illustrating an example of composite images 820, 840 generated based on event information 812, 832 according to an embodiment of the present disclosure. In FIG. 8, for ease of explanation, an example is described in which a first artificial neural network model (for example, the first artificial neural network model 450 in FIG. 4) generates the composite images 820, 840 in a first domain style based on first input images 810, 830 in the first domain style and event information. However, the generation of composite images 820, 840 is not limited to that example. Composite images 820, 840 may be generated based on content information and event information by the artificial neural network model 120 in FIG. 1.

According to an embodiment, the processor may acquire event information associated with a specific event. The specific event may be an event associated with a battlefield situation (for example, an event occurring in an actual battlefield situation or a simulated battlefield situation). In addition, the specific event may be an event associated with an object of the defense industry (for example, a fighter jet, a battleship, etc.). Event information may include at least one of segmentation information, bounding box information, edge information, or text information associated with the specific event.

According to an embodiment, event information may include region information associated with the specific event. Region information may refer to information about a region in which content associated with the specific event is to be generated in the composite images 820, 840. Region information may include position information and/or size information associated with the specific event.

According to an embodiment, event information may include class information associated with the specific event. Class information may refer to the type, configuration, or characteristics, etc., of the specific event to be generated in the composite image. For example, class information may be categorized into types such as "flame," "light," and the like. In that case, even within the type information "flame," various situations may be categorized, for example, "flames emitted from a fighter jet engine," "flames caused by the fighter jet being shot or exploded," "forest fire," etc.

According to an embodiment, event information may include at least one of region information or class information. For example, if event information includes only region information, the artificial neural network model may generate a composite image in which content associated with the specific event is generated in a region corresponding to that region information. In that case, class information of the specific event may be automatically determined based on the region information. Similarly, if event information includes only class information, the artificial neural network model may generate a composite image that includes the specific event corresponding to that class information. In that case, region information of the specific event may be automatically determined based on the class information.

According to an embodiment, the first input images 810, 830 in the first domain style may include specific object(s) associated with a battlefield situation or the defense industry (for example, a battleship, a fighter jet, a tank, a helicopter, etc.). In that case, region information associated with the specific event may be determined as a region adjacent to the specific object.

For example, the processor may acquire the first input image 810 that includes a specific object associated with a battlefield situation or the defense industry. Also, the processor may acquire event information 812 associated with a specific event to be generated in the composite image 820. Event information 812 may include region information and class information. For instance, the processor may acquire, as region information, a rearward region adjacent to the specific object, and acquire, as class information, "flame." In this case, the processor may generate the composite image 820 in which content 822 associated with the specific event corresponding to that class information is generated in the region corresponding to that region information.

Alternatively, event information 912 may include only region information. For example, the processor may acquire a rearward region adjacent to the specific object as region information. In that case, the processor may automatically determine class information for the specific event based on the positional relationship between the specific object and the region information of the specific event. Specifically, the processor may recognize "fighter jet" as the specific object, and based on the positional relationship between "fighter jet" and the region determined to be adjacent to the rearward area of the "fighter jet," the processor may automatically determine the class information for the specific event to be "flames emitted from a fighter jet engine." In that case, the processor may generate the shape of the flame corresponding to that class information as content 822 associated with the specific event within the composite image.

Alternatively, event information 812 may include only class information. For example, the processor may acquire "flames emitted from a fighter jet engine" as class information associated with the specific event. In that case, the processor may automatically determine region information associated with the specific event as the rearward region of the "fighter jet" based on the class information.

In another example, the processor may acquire the first input image 830 that includes a specific object associated with a battlefield situation or the defense industry. Also, the processor may acquire event information 832 associated with a specific event to be generated in the composite image 840. Event information 832 may include region information and class information. For example, the processor may acquire, as region information, a region adjacent to a lateral side of the specific object, and acquire, as class information, "flame." In that case, the processor may generate the composite image 840 in which content 842 associated with the specific event corresponding to that class information is generated in the region corresponding to that region information.

Alternatively, event information 832 may include only region information. For example, the processor may acquire a region adjacent to a lateral side of the specific object as region information. In that case, the processor may automatically determine class information for the specific event based on the positional relationship between the specific object and the region information of the specific event. Specifically, the processor may recognize "fighter jet" as the specific object, and based on the positional relationship between "fighter jet" and the region determined to be adjacent to the lateral side of the "fighter jet," the processor may automatically determine the class information for the specific event to be "flames caused by the fighter jet being shot or exploded." In that case, the processor may generate the shape of the flame corresponding to that class information as content 842 associated with the specific event within the composite image.

Alternatively, event information 832 may include only class information. For example, the processor may receive "flames caused by the fighter jet being shot or exploded" as class information associated with the specific event. In that case, the processor may automatically determine region information associated with the specific event as the region adjacent to a lateral side of the "fighter jet," based on the class information.

FIG. 8 illustrates only an example that includes class information associated with "flame," but the present disclosure is not limited thereto, and a composite image that includes various events corresponding to different class information may be generated. Furthermore, as shown in FIG. 8, even for the same class information (for example, "flame"), by changing region information (for example, a rearward region of the fighter jet, a region adjacent to a lateral side of the fighter jet, etc.), it is possible to generate composite images including a variety of similar events. For example, for class information associated with "light," by varying the region information associated with that event, it is possible to generate a composite image that includes various events related to a battlefield situation, such as a headlight, an illumination flare, etc.

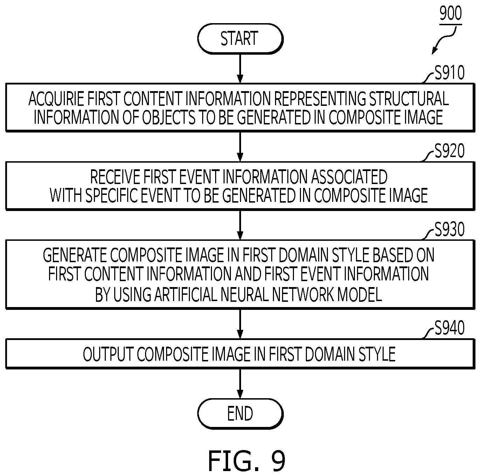

FIG. 9 is a flowchart illustrating an example of an image generation method 900 according to an embodiment of the present disclosure. In an embodiment, method 900 may be performed by at least one processor of a user terminal and/or an information processing system. Method 900 may begin with the processor acquiring first content information representing structural information of objects to be generated in a composite image S910.

According to an embodiment, the step of acquiring the first content information may include receiving an input image and generating the first content information based on the input image. In this case, the domain style of the input image and the domain style of the composite image to be generated may differ from each other.

Then, the processor may receive first event information associated with a specific event to be generated in the composite image S920. The specific event may be an event associated with a battlefield situation. Also, the first event information may include at least one of segmentation information, bounding box information, edge information, or text information associated with the specific event.

According to an embodiment, the step of receiving the first event information may include receiving region information associated with the specific event. Region information may include position information and size information associated with the specific event. In that case, the composite image may be an image in which content associated with the specific event is generated in the region corresponding to the received region information. Also, the composite image may include a specific object. In this case, the region information for the specific event may be associated with a region adjacent to the specific object included in the composite image.

Then, the processor may generate a composite image in a first domain style based on the first content information and the first event information by using an artificial neural network model S930. Subsequently, the processor may output the composite image in the first domain style S940. Here, the first domain style may be an IR (Infrared) image style. In addition, the artificial neural network model may be a model that receives a training image in the first domain style associated with the specific event, generates second content information based on the training image, generates second event information associated with the specific event based on the training image, and is trained based on the training data of the second content information, the second event information, and the training image.

According to an embodiment, the first event information may include multiple different event information items. For example, the processor may encode (1-1)-th event information to generate first encoded data, encode (1-2)-th event information to generate second encoded data, and generate a composite image in the first domain style based on the first encoded data and the second encoded data. Here, the (1-1)-th event information and the (1-2)-th event information may be two among segmentation information, bounding box information, edge information, and text information.

The flowchart of FIG. 9 and the above descriptions are merely one example, and the scope of the present disclosure is not limited thereto. For example, at least one step may be added/changed/deleted, or the order of each step may be changed.

The above-described method may be provided as a computer program stored in a computer-readable recording medium, in order to be executed by a computer. The medium may continuously store a computer-executable program, or temporarily store the program for execution or download. In addition, the medium may be a recording means or storage means of various forms in which a single piece of hardware or multiple hardware are combined, and it is not limited to media directly connected to a certain computer system but may be distributed over a network. Examples of media include magnetic media such as hard disks, floppy disks, and magnetic tape, optical recording media such as CDs and DVDs, magnetooptical media such as floptical disks, and ROM, RAM, flash memory, and the like, which are configured to store program instructions. Further examples of media include media or storage media managed by application distribution app stores or other sites/servers that supply or distribute various software.

Methods, operations, or techniques of the present disclosure may be implemented in various ways. For example, such techniques may be implemented in hardware, firmware, software, or a combination thereof. One of ordinary skill will understand that various exemplary logical blocks, modules, circuits, and algorithm steps described in connection with the present disclosure may be implemented in electronic hardware, computer software, or a combination thereof. In order to clarify this interchangeability of hardware and software, various exemplary components, blocks, modules, circuits, and steps have been described generally in functional terms above. Whether these functions are implemented in hardware or software depends on design constraints imposed on the overall system and the particular application. One of ordinary skill may implement the described functions in various ways for each specific application, but these implementations should not be interpreted as departing from the scope of the present disclosure.

In a hardware implementation, the processing units used to perform the techniques may be implemented within one or more ASICs, DSPs, GPUs, digital signal processing devices (DSPDs), programmable logic devices (PLDs), field programmable gate arrays (FPGAs), processors, controllers, microcontrollers, microprocessors, electronic devices, or other electronic units designed to perform the functions described in the present disclosure, or in combination thereof.

Therefore, various exemplary logical blocks, modules, and circuits described in connection with the present disclosure may be implemented or performed by a general-purpose processor, a DSP, an ASIC, an FPGA or another programmable logic device, discrete gate or transistor logic, discrete hardware components, or any combination thereof configured to perform the functions described in the present disclosure. A general-purpose processor may be a microprocessor, but in the alternative, the processor may be any conventional processor, controller, microcontroller, or state machine. The processor may also be implemented as a combination of computing devices, for example, a combination of a DSP and a microprocessor, multiple microprocessors, one or more microprocessors in conjunction with a DSP core, or any other such configuration.

In a firmware and/or software implementation, the techniques may be implemented as instructions stored on a computer-readable medium such as RAM, ROM, NVRAM, PROM, EPROM, EEPROM, flash memory, a magnetic or optical data storage device, or the like. The instructions may be executed by one or more processors, causing the processors to perform certain aspects of the functions described herein.

If implemented in software, the above-described techniques may be stored or transmitted on one or more instructions or code on a computer-readable medium. A computer-readable medium includes both computer storage media and communication media, including any medium that facilitates transfer of a computer program from one place to another, and includes any available media accessible by a computer. By way of a non-limiting example, such computer-readable media can include RAM, ROM, EEPROM, CD-ROM, or other optical disk storage, magnetic disk storage, or other magnetic storage devices, or any other medium used to store or transfer desired program code in the form of instructions or data structures and accessible by a computer. Also, any connection is properly considered a computer-readable medium.

For example, if software is transmitted from a website, server, or other remote source over coaxial cable, fiber optic cable, twisted pair, digital subscriber line (DSL), or wireless technologies such as infrared, radio waves, or microwave, then the coaxial cable, fiber optic cable, twisted pair, DSL, or wireless technologies such as infrared, radio waves, or microwave are included within the definition of such a medium. Disks and discs, as used herein, include compact disc (CD), laser disc, optical disc, digital versatile disc (DVD), floppy disk, and Bluray disc, where disks typically reproduce data magnetically, while discs reproduce data optically with lasers. Combinations of the above should also be included within the scope of computer-readable media.

Software modules may reside in a random access memory (RAM) memory, a flash memory, a read-only memory (ROM) memory, an EPROM memory, an EEPROM memory, registers, a hard disk, a removable disk, a CD-ROM, or any known form of storage medium. An exemplary storage medium may be connected to a processor so that the processor can read information from, and write information to, the storage medium. Alternatively, the storage medium may be integral to the processor. The processor and the storage medium may reside in an ASIC. The ASIC may reside in a user terminal. Alternatively, the processor and the storage medium may reside as discrete components in a user terminal.

Although the above-described embodiments have been described as utilizing aspects of the currently disclosed subject matter in one or more stand-alone computer systems, the present disclosure is not limited thereto and may be implemented in any computing environment, such as a network or distributed computing environment. Furthermore, aspects of the subject matter described in the present disclosure may be implemented across multiple processing chips or devices, and storage may likewise be affected across multiple devices. Such devices may include PCs, network servers, and handheld devices.

Although the present disclosure has been described in connection with some embodiments, various modifications and changes can be made without departing from the scope of the present disclosure that one of ordinary skill, to which the present disclosure pertains, would understand. Such modifications and changes should be regarded as being included in the scope of the claims appended hereto.

## Claims

1. An image generation method performed by an apparatus, the method comprising:
acquiring first content information (110) representing structural information of objects to be generated in a composite image (130);
receiving first event information (112) associated with a specific event to be generated in the composite image (130);
based on the first content information (110) and the first event information (112), generating, by using an artificial neural network model (120), the composite image (130) in a first domain style; and
outputting the composite image (130) in the first domain style.

2. The image generation method according to claim 1, wherein acquiring the first content information (110) comprises:
receiving an input image (430) in a second domain style; and
generating, based on the input image (430), the first content information (110),
wherein the first domain style is different from the second domain style.

3. The image generation method according to claim 1, wherein the receiving the first event information (112) comprises receiving region information associated with the specific event,
wherein the composite image (130) is an image in which content associated with the specific event is generated in a region corresponding to the region information.

4. The image generation method according to claim 3, wherein the region information comprises position information associated with the specific event and size information associated with the specific event.

5. The image generation method according to claim 2, wherein the composite image (130) comprises a specific object, and
wherein region information associated with the specific event is associated with a region adjacent to the specific object.

6. The image generation method according to claim 1, wherein the first event information (112) comprises at least one of segmentation information associated with the specific event, bounding box information, edge information, or text information.

7. The image generation method according to claim 1, wherein the first event information (112) comprises multiple pieces of different event information associated with the specific event to be generated in the composite image, and
wherein the generating the composite image comprises:
encoding (1-1)-th event information to generate first encoded data; encoding (1-2)-th event information to generate second encoded data; and
generating, based on the first encoded data and the second encoded data, the composite image (130) in the first domain style.

8. The image generation method according to claim 7, wherein the (1-1)-th event information and the (1-2)-th event information are two pieces of information among segmentation information, bounding box information, edge information, and text information.

9. The image generation method according to claim 1, wherein the artificial neural network model (530) is generated by:
receiving a training image (510) in the first domain style associated with the specific event;
generating, based on the training image (510), second content information (522);
generating, based on the training image (510), second event information (524) associated with the specific event; and
training, based on training data, the artificial neural network model (530), wherein the training data comprises the second content information (522), the second event information (524), and the training image (510).

10. The image generation method according to claim 1, wherein the first domain style is an Infrared (IR) image style.

11. The image generation method according to claim 1, wherein the specific event is an event associated with a battlefield situation.

12. An information processing system, comprising:
a communication interface;
at least one processor; and
a memory storing at least one computer-readable program instruction that, when executed by the at least one processor communicating with the memory, is configured to cause the information processing system to:
acquire a first input image (430) in a first domain style;
receive first event information (440) associated with a specific event to be generated in a composite image (460);
based on the first input image (430) and the first event information (440), generate, by using a first artificial neural network model (450), the composite image (460) in the first domain style; and
output the composite image (460) in the first domain style.

13. The information processing system according to claim 12, wherein the first artificial neural network model (730) is trained by:
receiving a training image (710) in the first domain style associated with the specific event;
generating, based on the training image (710), second event information (722) associated with the specific event; and
training, based on a pair comprising the second event information (722) and the training image (710), the first artificial neural network model (730).

14. The information processing system according to claim 12, wherein the at least one computer-readable program instruction is further configured to cause the information processing system to:
receive a second input image in a second domain style;
generate, based on the second input image, content information (410); and
generate the first input image (430) in the first domain style associated with the content information (410) by using a second artificial neural network model (420), and
wherein the first domain style and the second domain style are different from each other.

15. The information processing system according to claim 14, wherein the first domain style is an Infrared (IR) image style,
wherein the second domain style is a real-world image style, and
wherein the specific event is an event associated with a battlefield situation.
